**Europäisches Patentamt**

**European Patent Office**

**Office européen des brevets**

(19)

(11) Veröffentlichungsnummer: **0 126 790**
**B1**

(12) # EUROPÄISCHE PATENTSCHRIFT

(45) Veröffentlichungstag der Patentschrift:
**03.09.86**

(51) Int. Cl.⁴: **H 01 F 10/30,** G 11 B 5/70,
G 11 B 5/82

(21) Anmeldenummer: **83105262.6**

(22) Anmeldetag: **27.05.83**

(54) **Zusammengesetzte Magnetplatte.**

(43) Veröffentlichungstag der Anmeldung:
**05.12.84 Patentblatt 84/49**

(45) Bekanntmachung des Hinweises auf die Patenterteilung:
**03.09.86 Patentblatt 86/36**

(84) Benannte Vertragsstaaten:
**DE FR GB**

(56) Entgegenhaltungen:
EP-A-0 054 640
DE-A-1 921 275
FR-A-1 389 006
FR-A-2 503 908
GB-A-2 096 647

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk, N.Y.
10504 (US)**

(84) Benannte Vertragsstaaten: **FR GB**

(72) Erfinder: **Bayer, Thomas, Uhlbergstrasse 15, D-7030
Böblingen (DE)**
Erfinder: **Hinkel, Holger, Dr. Dipl.- Phys.,
Zeisigweg 13, D-7030 Böblingen (DE)**
Erfinder: **Kleischmann, Kurt, Gechinger Strasse 6,
D-7277 Wildberg 4 (DE)**
Erfinder: **Künzel, Ulrich, Dr. Dipl.- Chem., August-
Lämmle- Strasse 8, D-7408 Kusterdingen (DE)**
Erfinder: **Schäfer, Rolf, Dr. Dipl.- Min.,
Ritterstrasse 25, D-7031 Gärtringen- Rohrau (DE)**

(74) Vertreter: **Kreidler, Eva- Maria, Dr. rer. nat.,
Schönaicher Strasse 220, D-7030 Böblingen (DE)**

EP 0 126 790 B1

## Beschreibung

Die Erfindung betrifft eine Magnetplatte, insbesondere eine zusammengesetzte Magnetplatte.

Bei der magnetischen Aufzeichnung werden starre Aufzeichnungsträger verwendet, die in der Regel aus einem Aluminiumsubstrat und einer darauf aufgebrachten Magnetschicht, bestehend aus einer Dispersion eines Magnetpigments in einem härtbaren Bindemittel bestehen. Die Magnetschicht derart aufgebauter Aufzeichnungsträger ist in der Regel zwischen 0,5 - 1,5 µm dick und eignet sich für Aufzeichnungsdichten bis etwa 10000 bpi. Für Aufzeichnungsdichten, die darüber liegen, werden Magnetschichten benötigt, die sich sowohl hinsichtlich der Schichtdicke als auch der Magnetwerte von den konventionellen Oxid-Dispersionsschichten unterscheiden. Aus der deutschen Auslegeschrift 22 23 932 ist bekannt, daß die Aufzeichnungsdichte von der Schichtdicke und von der Koerzitivkraft abhängt. Aus diesem Grunde wurde versucht, die Schichtdicke unter Anhebung der Packungsdichte und der Koerzitivkraft zu reduzieren. Dies gelingt beispielsweise durch Aufbringen extrem dünner ferromagnetischer Filme, die in der Regel durch Aufsputtern, Aufdampfen oder Elektroplattieren von Metallen der achten Nebengruppe des periodischen Systems im Hochvakuum auf ein Aluminiumsubstrat oder durch Aufbringen ferromagnetischer Metallfilme nach galvanischen bzw. chemischen Verfahren aus entsprechenden Metallsalzlösungen hergestellt werden. Magnetische Dünnfilmplatten, die durch Aufbringen eines magnetischen Überzugs auf einem Aluminiumsubstrat nach einem der zuvor genannten Verfahren hergestellt werden, weisen in der Regel Magnetschichten auf, welche dünner sind als diejenigen, die mit in einem härtbaren Bindemittel dispergierten Magnetteilchen hergestellt werden können. Nachteilig an diesen Dünnfilmplatten ist, daß oft erhebliche Korrosionsprobleme auftreten, im wesentlichen wegen der Reaktion zwischen dem Metallsubstrat, welches aus Gewichtsgründen Aluminium ist und dem darauf abgeschiedenen Dünnfilm. Bei diesen Platten war es erforderlich, eine oder mehrere Schutzschichten zwischen dem Substrat und der magnetischen Dünnfilmschicht und darüber aufzutragen. Es ist verständlich, daß das Aufbringen von Schutzschichten einen erheblichen Kostenfaktor bei der Herstellung von Dünnfilmplatten bedeutet. Außerdem wurde bei Magnetplatten, sowohl bei solchen mit konventionellen Oxid-Dispersionsschichten wie auch bei solchen mit magnetischen Dünnfilmen, ein Substrat mit wesentlich größerer Dicke als die Schichtdicke der Magnetschicht verwendet, was erheblich zu dem Gewicht einer Anordnung beiträgt, die mehrere solcher Platten enthält.

Ein wesentliches Problem bei der Herstellung von Magnetplatten auf der Basis von dünnen metallischen ferromagnetischen Filmen ist die Bereitstellung geeigneter Substrate. Da die Schichtdicken metallischer ferromagnetischer Filme weit unter der Schichtdicke handelsüblicher, mit einer Dispersion von $\gamma$-Eisen-III-oxid in einem Bindemittel beschichteter Magnetspeicher liegen, werden an die Substratoberfäche bezüglich Oberflächenrauhigkeit, Kratzer- und Lochfreiheit sehr hohe Anforderungen gestellt. Es ist deshalb erwünscht, eine möglichst hohe Oberflächenperfektion der Magnetplatten zu erreichen.

Bisher wurden bei Magnetplatten als Substrate in der Regel Aluminiumscheiben verwendet, deren Oberfläche durch mechanische Bearbeitungsschritte wie Schleifen, Drehen und Läppen besonders glatt gemacht wird. Bedingt durch die Art des Verfahrens treten jedoch z.B. beim Läppen von Aluminiumscheiben häufig Läppkratzer auf, die durch einen nachgeschalteten Schleifvorgang nur schwer wieder zu beseitigen sind. Kleinste Vertiefungen in der Oberfläche des Substrats führen aber bei sehr dünnen Filmen zu Fehlern bei der magnetischen Aufzeichnung, und andererseits wird durch ein zu intensives Schleifen bzw. Polieren die Ebenheit des Substrats nachträglich verschlechtert. Dies wiederum führt zu einer unerwünschten Amplitudenmodulation und zu einer Berührung zwischen Magnetkopf und Platte, wenn die aufgezeichnete Information mit fliegenden Magnetköpfen gelesen wird. Ein weiteres Problem bei der Herstellung einwandfreier, für Metallfilme geeigneter Substrate ist die Qualität der eingesetzten Aluminiumlegierung. Oxideinschlüsse und Lunker in der Oberfläche der Aluminiumplatte können bei der Verarbeitung zu Löchern und Vertiefungen und bei der Anwendung der Magnetplatte zu zusätzlichen Fehlern führen. Die Verfahren zum Polieren von Substratoberflächen (Europäische Offenlegungsschrift 64 136) und die Beschichtungsverfahren konnten zwar verbessert werden, weitere Verbesserungen bei der Anwendung der Magnetplatten können jedoch nur durch eine Vervollkommnung der Substratoberflächen erreicht werden.

Im Stand der Technik sind eine Anzahl von zusammengesetzten Magnetplatten beschrieben. Als Beispiele werden die deutsche Auslegeschrift 12 99 029, die US-Patentschrift 3 681 225, die deutsche Auslegeschrift 26 48 303 und die Europäische Patentanmeldung 54 640 genannt.

In der deutschen Auslegeschrift 12 99 029 wird eine Magnetplatte beschrieben, bei der magnetische Schichten durch Pressen mit einem Trägerkern aus einem mit Füllstoff versehenen Gießharz verschmolzen werden. In der US-Patentschrift 3 681 225 wird eine Magnetplatte beschrieben, bei der eine Magnetschicht durch galvanischen Niederschlag auf einem Kern aus einem synthetischen Harz hergestellt wird. In der deutschen Auslegeschrift 26 48 303 wird ein magnetisches Aufzeichnungselement beschrieben, bei dem sich auf einer aus einer Legierung bestehenden Platte eine Schicht aus einer unmagnetischen Legierung befindet, die die Oberfläche der legierten Platte überzieht. Auf dieser befindet sich ein aus einem magnetmetallischen Medium bestehender Dünnfilm, der eine glanzgeschliffene bzw. fein bearbeitete Oberfläche der Legierungsschicht überzieht; eine amorphe, anorganische Oxidschicht, die die Oberfläche des Dünnfilms überzieht und eine Schmiermittelschicht, die die Oxidschicht überzieht und so ausgebildet ist, daß sie an derselben haftet. In der Europäischen Patentanmeldung 54 640 ist eine zusammengesetzte Struktur zur magnetischen Aufzeichnung beschrieben, bei der sich auf einem Trägerkern aus Polymermaterial wenigstens eine Siliciumscheibe befindet, die auf ihrer äußeren Oberfläche mit dem magnetischen Aufzeichnungsmaterial beschichtet ist. Die Oberfläche der Siliciumscheibe ist zwar bezüglich Ebenheit und Oberflächenglätte hervorragend, nachteilig an der Platte ist jedoch, daß ihr Durchmesser auf die bei Silic-iumwafern üblichen Durchmesser von maximal etwa 15 cm beschränkt ist. Außerdem weist das Silicium nicht die hohe mechanische Festigkeit auf, die für seine Verwendung als Substratmaterial erwünscht ist.

Der vorliegenden Erfindung liegt die Aufgabe zugrunde, eine zusammengesetzte Magnetplatte mit einem starren Träger anzugeben, der eine ausgezeichnete Oberflächengüte aufweist und aufgrund der vorteilhaften mechanischen Eigenschaften des Grundmaterials, beispielsweise des hohen spezifischen Elastizitätsmoduls, den Einsatz der Magnetplatte bei extrem hohen Drehgeschwindigkeiten ermöglicht.

Die Aufgabe der Erfindung wird gelöst durch eine Magnetplatte gemäß Patentanspruch 1.

Der Träger der erfindungsgemäßen Magnetplatte aus einem Kern aus Polymermaterial und einer oder zwei Scheiben aus reaktionsgebundenem Siliciumcarbid weist eine Ebenheit und Oberflächenglätte auf, die der des zuvor beschriebenen Trägers mit Siliciumscheiben entspricht. Aufgrund des extrem hohen spezifischen Elastizitätsmoduls und der niedrigen Dichte des eingesetzten reaktionsgebundenen Siliciumcarbids sind kritische Drehzahlen der so zusammengesetzten Magnetplatten erreichbar, die um einen Faktor von etwa 2 größer sind als die bisher verwendeter Magnetplatten mit AlMg5-Plattensubstraten.

Die Erfindung wird anhand der Beschreibung und eines Ausführungsbeispiels und der Zeichnungen näher erläutert. Es zeigen:

Fig. 1 eine perspektivische Ansicht einer Scheibe aus reaktionsgebundenem Siliciumcarbid, welche beidseitig eine Siliciumoberfläche aufweist.

Fig. 2 eine perspektivische Ansicht, teilweise geschnitten, einer zusammengesetzten Magnetplatte aus einem Polymerkern, welcher nach dem Spritzgußverfahren hergestellt wurde und auf den beidseitig Scheiben aus reaktionsgebundenem Siliciumcarbid aufgebracht sind.

Fig. 3 eine geänderte Ausführungsform von Fig 2, in der der Kern mit einem erhöhten Mittelteil versehen ist, welches das Aufeinanderschichten mehrerer Platten erleichtert.

Es wird angestrebt, die Zugriffszeit bei Magnetplatten-Speichersystemen zu verringern. Eine solche Reduzierung der Zugriffszeit kann entweder über eine Erhöhung der Bitdichte oder/und eine Erhöhung der Drehzahl der Platte erfolgen. Eine Erhöhung der Bitdichte könnte mit dünneren Speicherschichten erreicht werden, wobei Defekte und Korrosion derzeit unüberwindliche Schwierigkeiten darstellen. Eine Reduzierung der Zugriffszeit durch Erhöhung der Drehzahl der Platte ist nur begrenzt möglich, weil die Drehzahl durch bestimmte Resonanzschwingungen, die bei einer kritischen Drehzahl $\Omega_C$ auftreten, nach oben begrenzt wird. Für die kritische Drehzahl gilt

$$\Omega_C \sim \sqrt{\frac{E}{\rho}} \, ,$$

wobei E der Elastizitätsmodul und $\rho$ die Dichte des Materials darstellen.

Gemäß der Erfindung wird eine zusammengesetzte Magnet-Platte bereitgestellt mit einem Träger, dessen Oberfläche sich ausgezeichnet bearbeiten läßt, wodurch ein Träger mit hoher Oberflächenglätte und Ebenheit erhalten wird, auf den dünnere Speicherschichten aufgetragen werden können und der andererseits aus einem Material aufgebaut ist, das sich durch eine niedrige Dichte und einen extrem hohen Elastizitätsmodul auszeichnet, wodurch kritische Drehzahlen erreichbar sind, die etwa um einen Faktor 2 größer sind als die üblicherweise verwendeter AlMg5 Plattensubstrate.

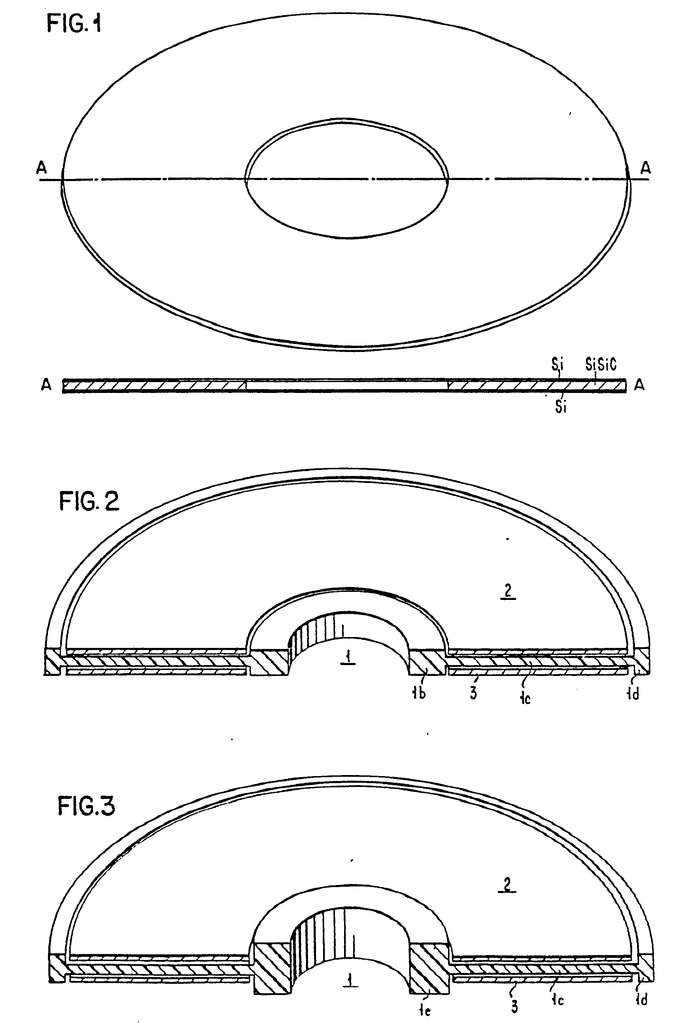

In einem Ausführungsbeispiel werden zunächst gemäß Fig. 1 Ronden aus reaktionsgebundenem Siliciumcarbid mit einem Außendurchmesser von 35,6 cm, einem Innendurchmesser von 17,8 cm in einer Dicke von 0,5 mm hergestellt. Bei der Herstellung geht man üblicherweise so vor, daß man aus Siliciumcarbid-Korngemischen, Ruß oder Graphit, ggf. Silicium, einem Bindemittel und einem Härter für dasselbe und ggf. einem organischen Gleitmittel eine sogenannte grüne Mischung formt. Bei der praktischen Durchführung kann beispielsweise eine Ausgangsmischung aus 74 Gew.% α-Siliciumcarbid mit einer maximalen Korngröße bis zu 150 μm, 13 Gew.% Ruß mit einer maximalen Korngröße bis 50 μm, 11 Gew.% Furfurylalkohol als Bindemittel und 2 Gew.% p-Toluolsulfonsäure als Härter verwendet werden.

Gegebenenfalls kann auch ein Lösungsmittel und organisches Gleitmittel zu der Mischung zugegeben werden. Die aus diesen Bestandteilen bestehende Masse kann im Vakuumofen oder unter Schutzgasatmosphäre unterhalb 100°C vorgetrocknet werden. Anschließend werden auf einer Gesenkpresse Ronden mit den gewünschten Abmessungen und einer zentralen Öffnung hergestellt. Der Preßdruck kann beispielsweise 60 N/mm² betragen. Die Siliciumcarbidronden werden bei einer Temperatur von ca. 1000°C vorgehärtet. Die Ronden werden überschliffen, um eine Rauhigkeit Ra von etwa 200 nm zu erreichen. Im Anschluß an das Überschleifen der Ronden werden dieselben einer Silicierung unterworfen. Hierzu muß Silicium von außen her zugeführt werden. Dies kann entweder in direktem Kontakt mit flüssigem Silicium oder über eine Si- bzw. SiO-Dampfphase geschehen. Das erstgenannte Verfahren, die Flüssigphaseninfiltration, kann als Tauch-, Pack- oder Dochttränkverfahren durchgeführt werden. Die Verfahren werden in der Weise durchgeführt, daß zunächst die Poren der SiC-Ronden mit Silicium gefüllt werden und dann auf der Oberfläche der Ronden eine ca. 1 bis 10 µm dicke Siliciumschicht gebildet wird. Beim Tauchverfahren werden die Ronden zunächst in schmelzflüssiges Silicium, welches auf einer Temperatur zwischen 1500 und 1700°C gehalten wird, getaucht. Hierbei füllen sich die Poren der SiC-Ronden mit Silicium. Während eines zweiten Tauchschrittes in eine borreiche Siliciumschmelze, die unterhalb von 1400°C schmelzflüssig ist, wird ein dünner Siliciumfilm auf der Oberfläche der Ronden gebildet. Die Arbeitstemperatur von unterhalb 1400°C verhindert ein Wiederaufschmelzen des Siliciums in den Poren der SiC-Ronden.

Beim Dochttränkverfahren wird das Silicium in einen Tiegel gegeben und die zu silicierenden SiC-Ronden darüber angeordnet. Das geschmolzene Silicium steigt bei Temperaturen größer 1400°C infolge der Kapillarwirkung über das Porensystem im Formteil nach oben und infiltriert den Körper. Ein direkter Kontakt mit der Formteil-Oberfläche wird dabei vermieden. Die Rondenrückseite wird bei diesem Verfahren mit einer gut wärmeleitenden Keramik (z.B. BeO, Al₂O₃) kontaktiert. Über den Temperaturgradienten ΔT wird das Füllen der Poren der SiC-Ronden mit Silicium und das Aufbringen eines dünnen, bis 10 µm dicken Siliciumfilms auf der Oberfläche der Ronden eingestellt.

Nach dem Abkühlen werden die Ronden einseitig poliert, bis eine Oberflächenrauhigkeit Ra von 25 nm erreicht ist. Da es sich bei der zu polierenden Oberfläche um eine reine Siliciumoberfläche handelt, können die bei der Siliciumwaferherstellung bewährten Verfahren zur Anwendung kommen. Es kann auch das Polierverfahren, das in der Europäischen Patentanmeldung 64 136 beschrieben ist, Anwendung finden. Falls die angestrebte Endrauhigkeit Ra von ungefähr 25 nm im ersten Schritt nicht erreicht wird, können die Ronden nochmals in schmelzflüssiges Silicium bei einer Arbeitstemperatur unter 1400°C getaucht und nach dem Abkühlen erneut poliert werden. Das Produkt des bisherigen Verfahrensablaufs ist in Fig. 1 gezeigt, wobei aus der Darstellung im Schnitt der etwa 0,5 mm starke SiSiC-Kern, der beidseitig mit einer etwa 1 bis 10 µm dicken Siliciumschicht bedeckt ist, ersichtlich ist.

In Fig. 2 wird eine Magnetplattenstruktur 1 gezeigt, welche aus SiSiC-Ronden 2 und 3 mit einer Siliciumoberfläche und einem ringförmigen Kern aus Polymermaterial aufgebaut ist, wobei das Polymermaterial eine hohe Steifigkeit und Zugfestigkeit und geringe Fließneigung aufweist. Die SiSiC-Ronden sind mit einem Klebstoff an dem Kern befestigt, und eine magnetische Aufzeichnungsschicht befindet sich auf der äußeren Oberfläche der SiSiC-Ronden 2 und 3. Im einzelnen besteht der durch Gießen hergestellte Kern aus einem Polymermaterial, welches mit Kohlefasern verstärkt ist. Dieses muß die zuvor angegebenen Eigenschaften aufweisen, um den Kräften, die durch die hohen Rotationsgeschwindigkeiten von bis zu 6000 U/min. auftreten, widerstehen zu können. Es wurde gefunden, daß Polymermaterialien wie Polyepoxidharze oder Polyphenylensulfide für diesen Zweck besonders geeignet sind. Der Kern mit einer zentralen Öffnung weist einen zentralen Teil 1b von gleichmäßiger Schichtdicke auf. Der an diesen Teil angrenzende Abschnitt 1c des Kerns weist eine geringere Schichtdicke auf und mündet in die dickere Lippe 1d rund um seine Peripherie. Die Ronden 2 und 3 werden auf dem Kern in bekannter Weise mit einem schnell aushärtenden Epoxidharzkleber durch Erhitzen auf etwa 80°C für 45 Minuten und etwa 150°C für 5 Minuten aufgeklebt. Die Ronden 2 und 3 weisen, wie zuvor angegeben, eine Oberfläühe hoher Glätte und Ebenheit auf. Eine Magnetschicht, die entweder als Dispersion von γ-Eisen-III-oxid in einem Bindemittel oder als Metalldünnschicht durch stromlose Abscheidung aufgetragen wird, befindet sich auf der äußeren Oberfläche der Ronden 2 und 3 und stellt die eigentliche Oberfläche für die magnetische Aufzeichnung dar. Die Magnetschicht kann vor oder nach dem Aufkleben der Ronden 2 und 3 auf den Kern aufgebracht werden. Der Kern dient dazu, das Auftreten von mechanischen Spannungsspitzen bei den SiSiC-Ronden zu verhindern, und der Lippenabschnitt 1d dient als Kantenschutz für die Ronden. Der Abschnitt 1b stellt eine feste Oberfläche zum Verklammern der einzelnen Strukturen miteinander dar. Wenn dieses erforderlich ist, findet keine Einwirkung von Kräften auf die SiSiC-Ronden selbst statt. Wenn eine Anzahl von Plattenstrukturen zu einem Stapel vereint werden sollen, können zur Vereinfachung der Verklammerung und zur Vermeidung einer Verschiebung der Platten ineinanderpassende Nasen und Schlitze oder Schlüsselkämme und Vertiefungen bereits beim Gießen der Kernstruktur hergestellt werden. Durch Variation der Menge und der Art der Faserverstärkung und der Bindemittelmaterialien, die zur Herstellung des Kerns verwendet werden, kann die gewünschte Angleichung der thermischen Ausdehnungskoeffizienten des Kernmaterials und der Aufzeichnungsmedien und der Steifigkeit der zusammengesetzten Struktur erhalten werden.

Die Struktur gemäß Fig. 2 kann als Aufzeichnungsträger mit zwei Oberflächen zur Aufzeichnung verwendet werden, indem die Vorrichtung am zentralen Abschnitt 1b mit einem geeigneten Antriebsmotor für die Rotation der Platten 2 und 3 verbunden wird und Magnetköpfe, welche zu den Platten radial beweglich sind, in bekannter Weise mit verschiedenen konzentrischen Aufzeichnungsspuren auf der Platte zusammenwirken.

Fig. 3 zeigt eine geänderte Ausführungsform von Fig. 2, wobei der zentrale Teil 1e wesentlich über die Oberfläche der Platten 2 und 3 hinausragt. Diese Ausführungsform wird verwendet, wenn eine Anzahl von Strukturen aufeinander angeordnet werden unter Ausbildung eines Magnetplattenstapels. Die Abmessung des zentralen Teils 1e gestattet die Einstellung eines ausreichenden Zwischenraums zwischen gegenüberliegenden Oberflächen der aufeinandergestapelten Platten, um die Einführung und Bewegung der Magnetköpfe relativ zu der benachbarten Aufzeichnungsfläche der Platte zu gewährleisten. Wie zuvor angegeben können Schlüsselkämme und Vertiefungen oder ineinanderpassende Nasen und Schlitze bereits bei der Herstellung im zentralen Abschnitt 1e vorgesehen werden, damit die Kräfte zur Verklammerung der Strukturen und die Verschiebung einer Struktur im Stapel relativ zu einer anderen auf ein Minimum herabgesetzt werden können.

**Patentansprüche**

1. Zusammengesetzte Magnetplatte bestehend aus einem ringförmigen Kern (1) aus Polymermaterial, mindestens einer Ronde (2, 3) die auf den Kern aufgeklebt ist, und einer magnetischen Aufzeichnungsschicht auf der äußeren Oberfläche der Ronde, dadurch gekennzeichnet, daß das Polymermaterial kohlefaserverstärkt ist und die Ronde aus reaktionsgebundenen Siliciumcarbid besteht.

2. Magnetplatte nach Anspruch 1, dadurch gekennzeichnet, daß auf den ringförmigen Kern (1) beidseitig Ronden (2, 3) aus reaktionsgebundenem Siliciumcarbid aufgeklebt sind und sich jeweils auf der äußeren Oberfläche der Ronden eine magnetische Aufzeichnungsschicht befindet.

3. Magnetplatte nach den Ansprüchen 1 und 2, dadurch gekennzeichnet, daß die Ronden (2, 3) aus reaktionsgebundenem Siliciumcarbid, das mit Silicium infiltriert ist, aufgebaut sind.

4. Magnetplatte nach Anspruch 3, dadurch gekennzeichnet, daß das reaktionsgebundene, mit Silicium infiltrierte SiSiC-Material eine Dichte von etwa 3,2 g/cm$^3$ und einen Elastizitätsmodul von etwa 350 kN/mm$^2$ aufweist.

5. Magnetplatte nach den Ansprüchen 1 bis 4, dadurch gekennzeichnet, daß sich auf der Oberfläche der Ronden eine etwa 1 bis 10 μm dicke Siliciumschicht befindet, die durch ein- oder mehrmaliges Tauchen der Ronden in eine borreiche Siliciumschmelze, die unter 1400°C schmelzflüssig ist, hergestellt wurde.

6. Magnetplatte nach den Ansprüchen 1 und 2, dadurch gekennzeichnet, daß der Kern (1) aus einem Polyphenylensulfid- oder Epoxidharz, welches mit Kohlefasern verstärkt ist, aufgebaut ist.

7. Magnetplatte nach den Ansprüchen 1 und 6, dadurch gekennzeichnet, daß der Kern ringförmige Vertiefungen aufweist, in der die SiSiC-Ronden angeordnet sind und die Wände der Vertiefungen zum Schutz der SiSiC-Ronden dienen.

8. Magnetplatte nach den Ansprüchen 1 und 6, dadurch gekennzeichnet, daß der mittlere Teil des Kerns (1e) erhöht ist damit beim Aufeinanderstapeln mehrerer Magnetplatten der für den Zugriff von Magnetköpfen erforderliche Abstand gewährleistet ist.

9. Magnetplatte nach einem oder mehreren der Ansprüche 1 bis 8, dadurch gekennzeichnet, daß die Ronden (2, 3) nach ihrer Bearbeitung eine hohe Ebenheit und eine Oberflächenrauhigkeit Ra von etwa 25 nm aufweisen.

10. Magnetplatte nach den Ansprüchen 1 und 2, dadurch gekennzeichnet, daß sich auf den äußeren Oberflächen der SiSiC-Ronden eine magnetische Aufzeichungsschicht aus Magnetteilchen dispergiert in einem organischen Bindemittel oder ein magnetischer Dünnfilm befindet.

**Claims**

1. Composite magnetic disk, consisting of an annular core (1) of polymeric material, at least one disk (2, 3) that is bonded to the core, and a magnetic recording layer on the outer surface of the silicon carbide disk, characterized in that the polymeric material is carbon fiber reinforced and in that the disk consists of reaction bonded silicon carbide.

2. Magnetic disk as claimed in claim 1, characterized in that on the annular core (1) disks (2, 3) of reaction-bonded silicon carbide are bonded on both sides, and that on the respective outer surface of the disks a magnetic recording layer is provided.

3. Magnetic disk as claimed in claims 1 and 2, characterized in that the disks (2, 3) are made of reaction-bonded silicon carbide with infiltrated silicon.

4. Magnetic disk as claimed in claim 3, characterized in that the reaction-bonded, silicon-infiltrated SiSiC material has a density of approximately 3.2 g/cm$^3$ and a modulus of elasticity of approximately 350 kN/mm$^2$.

5. Magnetic disk as claimed in any one of claims 1 to 4, characterized in that on the surface of the disks an approximately 1 to 10 μm thick silicon layer is provided which was made by immersing the disks once, or several times in a boron-enriched silicon melt which melts at less than 1400° C.

6. Magnetic disk as claimed in claims 1 and 2, characterized in that the core (1) is made of a polyphenylene sulfide or epoxide resin reinforced with carbon fibers.

7. Magnetic disk as claimed in claims 1 and 6, characterized in that the core has annular recesses where the SiSiC disks are arranged, the walls of said recesses serving to protect the SiSiC disks.

8. Magnetic disk as claimed in claims 1 and 6, characterized in that the center part of the core (1e) is raised so that if several magnetic disks are stacked one over the other the clearance necessary for the access by magnetic heads is ensured.

9. Magnetic disk as claimed in one or several of claims 1 to 8, characterized in that the disks (2, 3) present after their processing a high planarity and a surface roughness Ra of approximately 25 nm.

10. Magnetic disk as claimed in claims 1 and 2, characterized in that on the outer surface of the SiSiC disks a magnetic recording layer of magnetic particles dispersed in an organic binder or a magnetic thin film is provided.

## Revendications

1.- Disque magnétique composite comprenant un noyau annulaire (1) en matériau polymère, au moins un flan circulaire (2, 3) qui est collé sur le noyau, et une couche d'enregistrement magnétique sur la surface extérieure du flan circulaire, caractérisé par le fait que le matériau polymère est renforcé de fibres de carbone et que le flan circulaire est réalisé en carbure de silicium combiné par réaction.

2.- Disque magnétique selon la revendication 1, caractérisé par le fait que sur les deux faces du noyau annulaire (1) sont collés des flans circulaires (2, 3) en carbure de silicium combiné par réaction et qu'une couche d'enregistrement magnétique se trouve sur chacune des surfaces extérieures des flans circulaires.

3.- Disque magnétique selon les revendications 1 et 2, caractérisé par le fait que les flans circulaires (2, 3) sont réalisés en carbure de silicium combiné par réaction qui est infiltré de silicium.

4.- Disque magnétique selon la revendication 3, caractérisé par le fait que le matériau SiSiC, combiné par réaction et infiltré de silicium, a une masse volumique d'environ 3,2 g/cm$^3$ et un module d'élasticité d'environ 350 kN/mm$^2$.

5.- Disque magnétique selon les revendications 1 à 4, caractérisé par le fait que sur la surface des flans circulaires se trouve une couche de silicium d'environ 1 à 10 μm d'épaisseur qui a été fabriquée en plongeant une ou plusieurs fois les flans circulaires dans un bain de silicium riche en bore qui est en fusion en dessous de 1400° C.

6.- Disque magnétique selon les revendications 1 et 2, caractérisé par le fait que le noyau (1) est réalisé en un sulfure de polyphénylène ou en résine époxy avec renforcement de fibres de carbone.

7.- Disque magnétique selon les revendications 1 et 6, caractérisé par le fait que le noyau comporte des creux annulaires dans lesquels sont disposés les flans circulaires SiSiC et que les parois des creux servent à la protection des flans circulaires SiSiC.

8.- Disque magnétique selon les revendications 1 et 6, caractérisé par le fait que la partie médiane du noyau (1e) est surhaussée afin qu'en cas d'empilage de plusieurs disques magnétiques les uns sur les autres l'écartement nécessaire pour l'accès des têtes magnétiques soit garanti.

9.- Disque magnétique selon l'une ou plusieurs des revendications 1 à 8, caractérisé par le fait que les flans circulaires (2, 3) présentent après leur usinage une grande planéité et une rugosité de surface Ra d'environ 25 nm.

10.- Disque magnétique selon les revendications 1 et 2, caractérisé par le fait que sur les surfaces extérieures des flans circulaires SiSiC se trouve une couche d'enregistrement magnétique constituée de particules magnétiques dispersées dans un liant organique ou un mince feuil magnétique.

FIG. 1

A ——————————————————————————— A

Si   SiSiC
A ▬▬▬▬▬▬▬▬▬▬▬▬▬▬▬▬▬▬▬ A
Si

FIG. 2

2

1

1b   3   1c   1d

FIG. 3

2

1

1e   3   1c   1d